# EUROPEAN PATENT SPECIFICATION

(11) **EP 1 263 693 B1**
(45) Date of publication and mention of the grant of the patent: **05.04.2017**
(21) Application number: 01905518.5
(22) Date of filing: 14.02.2001
(51) Int. Cl.: C04B 35/01, C04B 35/111, C04B 35/117, C04B 35/119, C04B 35/626, C04B 38/00

(54) **METHOD FOR PRODUCING CERAMIC COMPOSITE FOAMS WITH HIGH MECHANICAL STRENGTH**
VERFAHREN ZUR ZERSTELLUNG VON KERAMISCHEN KOMPOSITSCHÄUME HOHER MECHANISCHER FESTIGKEIT
PROCEDE DE FABRICATION DES MOUSSES COMPOSITES CERAMIQUES DOTEES D'UNE FORTE RESISTANCE MECANIQUE

(30) Priority: 14.02.2000 BE 200000122
(43) Date of publication of application: 11.12.2002
(73) Proprietor: VLAAMSE INSTELLING VOOR TECHNOLOGISCH ONDERZOEK, afgekort V.I.T.O., onderneming van openbaar nut onder de vorm van een n.v., 2400 Mol (BE)
(72) Inventor: COOYMANS, Jozef, B-2400 Mol (BE); SMOLDERS, Carina, B-2491 Balen (BE); LUYTEN, Jan, B-3054 Vaalbeek (BE)
(74) Representative: Van Malderen, Joëlle
(86) International application number: PCT/BE2001/000022
(87) International publication number: WO 2001/058829

(56) References cited:
- WO-A-96/00125
- WO-A-96/06814
- WO-A-98/25685
- DE-A- 4 039 530
- US-A- 5 279 737
- N. CLAUSSEN ET AL.: "Reaction bonding of aluminum oxide (RBAO)" JOURNAL OF THE CERAMIC SOCIETY OF JAPAN, INT. EDITION, vol. 103, no. 8, 1995, pages 738-745, XP000546001 cited in the application

## Description

### Field of the invention

The present invention relates to a method for producing ceramic composite foams with high mechanical strength, more particularly ceramic composite foams formed with reaction bonded (RB) materials (metals and metal oxides) and through a thermal treatment (slow oxidation) typical of this reaction bonded production way.

### State of the art

Ceramic foam structures are porous materials with a very low density (from 10 to 20% theoretical density (TD)) which are used in a wide range of applications such as filters for melt metals, furnace liners, soot filters, catalyst substrates, biomedical implants, electro-ceramics, etc. Ceramic foam structures are disclosed by L.M. Sheppard, "Porous Ceramics : Processing and Applications", pp. 3-23 in Ceramics Transactions, vol.31, Porous Materials, ed. by K. Ishizaki, L.M. Sheppard, S. Okada, T. Hamasaki, and B. Huybrechts, ACS, Westerville, OH, 1993 and by L. Montanaro, Y. Joyrand, G. Fantozzi and A. Negro "Ceramics Foams by Powder Processing" J. Eur. Ceram. Soc. 18 (1998), 1339-1350.

Each new application requires specific properties such as a determined cell size, a satisfactory thermal shock strength, a mechanical strength and/or a determined resistance to crack propagation (toughness). These two latter properties limit particularly a quick development, mainly in structural applications where an optimum strength/weight ratio is desired.

Nowadays about 10 ceramic materials are commercially available as foams. The choice of the material type depends upon the specific properties. The most currently used production method for these foam structures is the PU-replica method wherein a soft PU-foam is dipped into a ceramic slurry. After elimination of the excess slurry and drying, the PU-foam is burnt off and, after sintering, a ceramic foam is obtained.

This method has the advantage that the cell size of such structures can be easily adapted by starting from another PU-foam having the appropriate cell size.

One inconvenience is the less satisfactory mechanical properties. Drying and burning off should be carefully carried out in order to prevent crack formation. Besides, "struts" (ribs) also occur naturally with typical prism-shaped cavities due to burning off of the PU-struts. This also is obviously an additional weakness for the foam structure.

In another method, such as gel casting, somewhat better mechanical properties are observed with specific cell sizes. But, in this case, there are more problems to obtain a determined cell size.

Nevertheless, whatever the production method is, the lifetime of foam structures in a number of applications is mainly limited due to their lack of mechanical strength.

A reaction bonded composite material, manufactured and thermally treated in the right way has a strength which is normally twice to three times higher than a similar material produced with a traditional method [J. Luyten, J. Cooymans, C. Smolders, S. Vercauteren, E.F. Vansant, R. Leysen "Shaping of multilayer ceramic membranes by dip coating", J. Eur. Ceram. Soc.17, 273-279,1997]. Moreover, such production way is appropriate for incorporating all sorts of phases, providing new composite materials with optimalized properties [N. Claussen, Suxing Wu and D. Holz, "Reaction Bonding of Aluminum Oxide (RBAO) Composites : Processing, Reaction Mechanisms and Properties, J. Eur. Ceram. Soc. 14 (1994) 97-109].

The production of dense RB materials is well known, specially disclosed by Prof. Claussen [N. Claussen, R. Janssen and D. Holz, J. Euram. Soc. Japan 103 [8] 749-758 (1995)]. Porous RBAO materials for membrane substrates were developed by the inventors [J. Luyten, J. Cooymans, C. Smolders, S. Vercauteren, E.F. Vansant, R. Leysen "Shaping of multilayer ceramic membranes by dip coating", J. Eur. Ceram. Soc. 17, 273-279, 1997]. The pore size of such materials (1 µm) is indeed of another order than that of the foam structure (1 mm). Reaction Bonding, Combustion Synthesis and Reaction Sintering are three different notions which should not be confused.

In Reaction Bonding, the starting point is a blend of metal and/or metal oxide powders, which, after shaping, are allowed to react in a controlled way with a gas. For an Al/Al₂O₃ powder blend for example, after shaping, air heating is very slowly performed while the Al-fraction is oxidized, forming a fine Al₂O₃ granule network. This oxidation is completed at 900°C, but time and temperature obviously depend upon the thickness and density of the green starting core. In order to avoid cracking, such heating step should be performed slowly. Such oxidation is not accompanied with a densification of the piece, but with an expansion. Further heating provides for the necessary contraction and densification of the material.

By Reaction Sintering it is meant a reaction of different materials in a solid state at a high temperature (> 1000°C), whereby beside the generation of new compounds, a densification of the material also occurs. An example thereof is the conversion of Al₂O₃ and SiO₂ into mullite (Al₆Si₂O₁₃).

A filter and a method for obtaining such a filter through reaction sintering are disclosed in WO 98/25685.

Combustion Synthesis is a production method wherein the starting point is ceramic precursors based on polymers. After shaping, a pyrolysis at high temperature (> 1000°C) is carried out in which a reaction occurs with the released carbon. An example is to heat silane compounds into ceramic material SiC through reaction of Si with C.

Porous membranes and methods for obtaining such membranes are disclosed in WO 96/06814, WO 96/00125 and US 5 279 737. The disclosed method is each time a combustion synthesis.

Other references include J. Saggio-Woyanski, C.E. Scott, WP Minnear, "Processing of Porous Ceramics" Amer. Ceram. Soc. Bull., vol. 71, n° 11, nov. 1992, pp. 1674-81 and P. Sepulveda, "Gelcasting foams for porous ceramics", Amer. Ceram. Soc. Bull., vol. 76, n° 10, oct. 1997,61-66.

### Aim of the invention

In order to enhance application possibilities for ceramic foams, to extend their lifetime and to improve them qualitatively for the today application field, it is necessary to develop new strong ceramic foam structures starting from a modified production method and new material compositions.

Accordingly, the invention aims to produce a ceramic foam having improved mechanical strength.

### Summary of the invention

The present invention relates to a method for producing a ceramic foam structure characterized in that it is produced from a reaction bonded powder.

The foam structure can be open or closed. The reaction bonded powder comprises two or more elements selected from the group consisting of metal and metal oxide.

Preferably, the average pore size is higher than 10 µm.

Preferably, the 4p bending strength is higher than 2 MPa.

The present invention is a production method for producing a ceramic foam structure, characterized in that the method comprises the following steps:
- providing a reaction bonded powder blend with metal and a metal oxide, by grinding the powder blend in a solvent selected from the group consisting of acetone, ethanol and methanol,
- producing a stable slurry of the powder blend in water or in a solvent,
- producing a foam,
- drying said foam,
- calcinating said foam,
- oxidizing said foam through slow air heating up to a final temperature between 900°C and 1100°C, and
- a final thermal treatment.

The foam production is preferably done through a technique selected from the group consisting of polyurethane replica technique and gel casting method.

In a preferred embodiment, the oxidation step comprises a step wherein the foam is maintained at the final temperature for one hour. The final thermal treatment may comprise a sintering step at a temperature comprised between 1600°C and 1700°C.

A ceramic foam structure may be obtained with such method.

Using this method, ceramic foams may be prepared which show better mechanical properties compared to traditional foams.

### Detailed description of the invention

Bulk reaction bonded materials are a new kind of materials with a higher strength and which allow easily the incorporation into the structure of K_{ic} (crack propagation factor) enhancing phases.

Consequently, the invention comprises on one hand producing new porous RB ceramic composites and on the other hand converting them, using one of the current methods, into a ceramic foam structure.

The starting point here is a reaction bonded powder (i.e. a blend of metal and metal oxides), and the PU (polyurethane) replica method or the gel casting method is used.

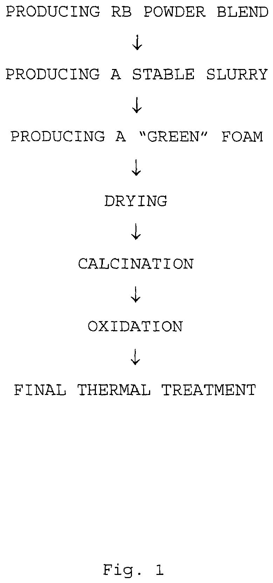

A possible flowsheet of a method according to the invention is shown in Fig. 1.

Moreover, the production method offers the possibility to integrate in a simple way all kinds of phases into the matrix material. Thus, beside the mechanical strength, the requirements of a specific application may be satisfied.

Combining different metals and metal oxides provides materials with a wide range of new properties and consequently of new possibilities.

Producing powders, conditioning them and treating them thermally should be adjusted depending upon the composition of the composite.

Preparation of the slurry should also be considered depending upon the composition, i.e. the additives are typical of the specific composition of the starting powder and of the applied producing way for producing a foam structure. If possible, an aqueous solution is preferred (environmental aspect).

The new proposed process comprises the following novelties compared to the traditional methods:
a. the starting point is a blend of metals and metal oxides,
b. they are conveniently conditioned, for example ground in acetone,
c. preparing a stable suspension of a metal/metal oxide blend involves special requirements as to the producing method and the additives to be added,
d. depending upon the selected production path for producing the green foam, new additives should be added, e.g., if the PU-replica method is used, a wetting agent should be added, while for the gel casting method a foam stabilizing agent should be used, etc.,
e. the oxidation and final treatment should be performed with a sufficiently slow heating speed and with different temperature plateaus in order to allow for the conversion of metals into oxides to be completed and without crack formation. Such oxidation is mainly performed under 1000°C.

### Example 1

### Producing an appropriate powder blend

An Al/Al₂O₃ blend in a 40/60 ratio by weight is intensively ground in a solvent (acetone, ethanol, methanol,...). This may be done using an attritor and/or a planetary ball mill.

### Example 2

### Producing a stable slurry

The stable slurry may be prepared in a solvent such as acetone, ethanol or methanol, or in water. When using water, an Al/Al₂O₃ powder blend should be first passivated so as to prevent hydrolysis and therefore H₂ generation. This can be done for example by adding an excess dispersing agent (e.g. Darvan C). The dispersing agent is absorbed on the Al surface and protects it from water.

Classical additives such as dispersing agents, an anti-foam agent, a wetting agent etc. are preferably added in order to optimize the properties.

### Example 3

### Producing a new RB mullite structure

### Example of a porous reaction bonded composite structure

Two compositions are used as starting points: Al/Al₂O₃/Si and Al/Si/Al₂O₃/ZrO₂

Extra ZrO₂ is added in the second composition in order to increase strength and because it improves the wetting of Al with Al₂O₃.

Both compositions are ground in acetone in a planetary ball mill with ZrO₂ balls.

The starting powders and the grinding time are selected in such a way that a porous structure is obtained after shaping (extrusion) and sintering (oxidation, mainly under 1000°C, and final thermal treatment). XRD analysis shows formation of mullite with some Al₂O₃ and ZrO₂ in the first composition, and mullite, ZrO₂ and some Al₂O₃ in the second composition. Free SiO₂ is no longer found, on the contrary, a full conversion into mullite occuring at temperatures not exceeding 1500°C is observed. The porosity is 35 to 40%, the maximum pore size is 2 µm and 4p bending strengths in the range from 50 to 100 MPa are obtained.

### Example 4

### Producing a RBAO (Reaction Bonded Al₂O₃) foam using the polyurethane replica technique

Al/Al₂O₃ 50/50 vol% are intensively blended/ground under acetone. This powder is dispersed, after passivation, in water with Darvan C^{™} as a dispersing agent and gelatine as a wetting agent. The water/solids ratio is adjusted so that a little viscous and consequently castable slurry is obtained.

A PU sponge (30 PPI) from Recticel company (Wetteren, Belgium) is dipped into this slurry. The excess slurry quantity is expressed from the sponge after which the assembly is dried.

Slow air heating is subsequently carried out up to 1100°C, whereby the polyurethane is burnt off at a temperature lower than 500°C and the oxidation of the powder metal fraction starts simultaneously. Some oxidation is terminated at 900°C. Further heating up to 1100°C offers a limited presintering which allows handling the foams carefully.

A final sintering operation for one hour at a temperature comprised between 1650 and 1700°C results in a 2.9 MPa three point bending strength for a foam having a cell size of approximatively 1.3 mm and a density in the range between 15 and 20% TD.

An identical example may be presented, wherein the shaping operation, here the Pu-replica method, is replaced by gel casting.

Generally speaking, the following can be stated regarding the temperatures and times that are used for the oxidation and sintering steps:
- Oxidation: after the slow heating step, the material is heated for one hour at a temperature comprised between 900°C and 1100°C. The precise temperature depends upon the granularity (and therefore the reactivity) of the powder.
- Sintering: sintering is completed by maintaining, in a final step, the material for one hour at a temperature comprised between 1600°C and 1700°C, depending upon the starting material and the desired final density.

## Claims

1. A method for producing a ceramic foam structure, **characterized in that** the method comprises the following steps:
• providing a reaction bonded powder blend comprising a metal and a metal oxide, by grinding the powder blend in a solvent selected from the group consisting of acetone, ethanol and methanol,
• producing a stable slurry of the powder blend in water or in a solvent,
• producing a foam,
• drying said foam,
• calcinating said foam,
• oxidizing said foam through slow air heating up to a final temperature comprised between 900°C and 1100°C, and
• a final thermal treatment.

2. The method according to claim 1, **characterized in that** the production of the foam is done through a technique selected from the group consisting of the polyurethane-replica technique and the gel casting method.

3. The method according to claim 1 or 2, **characterized in that** the oxidation comprises a step wherein the foam is maintained for one hour at the final temperature.

4. The method according to any one of claims 1 to 3, **characterized in that** the final thermal treatment comprises a sintering step at a temperature comprised between 1600°C and 1700°C.

## Patentansprüche

1. Ein Verfahren zum Herstellen einer Keramikschaumstruktur, **dadurch gekennzeichnet, dass** das Verfahren die folgenden Schritte umfasst:
• Bereitstellen einer reaktionsgebundenen Pulververmengung, die ein Metall und ein Metalloxid umfasst, durch Zerkleinern der Pulververmengung in einem Lösungsmittel, das aus der Gruppe bestehend aus Aceton, Ethanol und Methanol ausgewählt ist"
• Herstellen einer stabilen Aufschlämmung der Pulververmengung in Wasser oder in einem Lösungsmittel,
• Herstellen eines Schaums,
• Trocknen des besagten Schaums,
• Kalzinieren des besagten Schaums,
• Oxidieren des besagten Schaums durch langsame Lufterwärmung auf eine Endtemperatur zwischen 900 °C und 1100 °C, und
• eine Endwärmebehandlung.

2. Das Verfahren nach Anspruch 1, **dadurch gekennzeichnet, dass** die Herstellung des Schaums mithilfe einer Technik erfolgt, die aus der Gruppe ausgewählt ist, bestehend aus der Polyurethan-Nachbildungstechnik und dem Gelgießverfahren.

3. Das Verfahren nach Anspruch 1 oder 2, **dadurch gekennzeichnet, dass** die Oxidation einen Schritt umfasst, wobei der Schaum für eine Stunde auf der Endtemperatur gehalten wird.

4. Das Verfahren nach irgendeinem der Ansprüche 1 bis 3, **dadurch gekennzeichnet, dass** die Endwärmebehandlung einen Sinterschritt bei einer Temperatur zwischen 1600 °C und 1700 °C umfasst.

## Revendications

1. Procédé de fabrication d'une structure de type mousse céramique, **caractérisé en ce que** le procédé comprend les étapes suivantes :
• fourniture d'un mélange de poudres liées par réaction comprenant un métal et un oxyde de métal, par broyage du mélange de poudres dans un solvant choisi dans le groupe constitué de l'acétone, de l'éthanol et du méthanol,
• fabrication d'une suspension épaisse stable du mélange de poudres dans l'eau ou dans un solvant,
• fabrication d'une mousse,
• séchage de ladite mousse,
• calcination de ladite mousse,
• oxydation de ladite mousse par un chauffage lent de l'air jusqu'à une température finale comprise entre 900 °C et 1 100 °C, et
• traitement thermique final.

2. Procédé selon la revendication 1, **caractérisé en ce que** la fabrication de la mousse est effectuée par une technique choisie dans le groupe constitué de la technique de réplication de polyuréthane et du procédé de coulage de gel.

3. Procédé selon la revendication 1 ou 2, **caractérisé en ce que** l'oxydation comprend une étape dans laquelle la mousse est maintenue pendant une heure à la température finale.

4. Procédé selon l'une quelconque des revendications 1 à 3, **caractérisé en ce que** le traitement thermique final comprend une étape de frittage à une température comprise entre 1 600 °C et 1 700 °C.
